# EUROPEAN PATENT APPLICATION

(11) **EP 4 657 928 A1**
(43) Date of publication of application: **03.12.2025**
(21) Application number: 23933474.1
(22) Date of filing: 20.04.2023
(51) Int. Cl.: H04W 52/02

(54) **REQUEST INFORMATION SENDING METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: WANG, Hao, Dongguan, Guangdong 523860 (CN); ZHANG, Shichang, Dongguan, Guangdong 523860 (CN); MA, Teng, Dongguan, Guangdong 523860 (CN)
(74) Representative: Novagraaf Technologies
(86) International application number: PCT/CN2023/089594
(87) International publication number: WO 2024/216598

(57) **Abstract**

A request information sending method and apparatus, a device, and a storage medium, relating to the technical field of communications. The method includes: transmitting a first request message , which is used for request to share the channel occupancy time (COT) of at least one another terminal device. A terminal device transmits first request message to request to share COTs of other terminal devices, so that the terminal device performs type-2 channel access by means of the shared COT instead of performing type-1 channel access, thereby avoiding a channel sensing operation required for performing type-1 channel access, and then reducing the power consumption of the terminal device.

## Description

### TECHNICAL FIELD

Embodiments of the present disclosure relate to the technical field of communications, and in particular, relate to a method and apparatus for transmitting a request message, and a device and a storage medium therefor.

### RELATED ART

When operating on an unlicensed spectrum, a sidelink in unlicensed spectrum (SL-U) terminal device needs to perform a listen-before-talk (LBT) procedure before transmitting data, and upon performing a type-1 LBT procedure for channel access, the terminal device is required to listen based on a channel access priority, consuming quite a lot of power.

Therefore, from the perspective of reducing power consumption, how to conserve energy during a channel access procedure needs further research.

### SUMMARY

Embodiments of the present disclosure provide a method and apparatus for transmitting request messages, and a device and a storage medium therefor.

According to an aspect of the embodiments of the present disclosure, a method for transmitting request messages is provided. The method is performed by a terminal device, and includes:

transmitting a first request message, wherein the first request message is configured to request sharing of a channel occupancy time (COT) of at least one other terminal device.

According to an aspect of the embodiments of the present disclosure, an apparatus for transmitting request messages is provided. The apparatus includes:
a transmitting module, configured to transmit a first request message, wherein the first request message is configured to request sharing of a COT of at least one other terminal device.

According to an aspect of the embodiments of the present disclosure, a terminal device is provided. The terminal device includes: a processor and a memory, wherein the memory stores one or more computer programs, and the processor, when loading and running the one or more computer programs, is caused to perform the method for transmitting request messages.

According to an aspect of the embodiments of the present disclosure, a computer-readable storage medium is provided. The computer-readable storage medium stores one or more computer programs, wherein the one or more computer programs, when loaded and run by a processor, cause the processor to perform the method for transmitting request messages.

According to an aspect of the embodiments of the present disclosure, a chip is provided. The chip includes programmable electric circuitry and/or one or more program instructions, and the chip when running, is configured to perform the method for transmitting request messages.

According to an aspect of the embodiments of the present disclosure, a computer program product is provided. The computer program product includes one or more computer instructions stored in a computer-readable storage medium, wherein the one or more computer instructions, when loaded and run by a processor, cause the processor to perform the method for transmitting request messages.

The technical solutions according to the embodiments of the present disclosure may achieve the following beneficial effects:

By transmitting a first request message, a terminal device may request sharing of COTs of other terminal devices, such that the terminal device implements a type-2 channel access mechanism by the shared COTs instead of implementing a type-1 channel access mechanism. In this case, a channel sensing operation for performing the type-1 channel access mechanism is not required, and thus the power consumption of the terminal device is reduced.

### BRIEF DESCRIPTION OF DRAWINGS

FIG. 1 is a schematic diagram of a network architecture according to some embodiments of the present disclosure;
FIG. 2 is a schematic diagram of in-coverage sidelink communication according to some embodiments of the present disclosure;
FIG. 3 is a schematic diagram of partial-coverage sidelink communication according to some embodiments of the present disclosure;
FIG. 4 is a schematic diagram of out-of-coverage sidelink communication according to some embodiments of the present disclosure;
FIG. 5 is a schematic diagram of sidelink communication centrally controlled by a central control node according to some embodiments of the present disclosure;
FIG. 6 is a schematic diagram of unicast according to some embodiments of the present disclosure;
FIG. 7 is a schematic diagram of groupcast according to some embodiments of the present disclosure;
FIG. 8 is a schematic diagram of broadcast according to some embodiments of the present disclosure;
FIG. 9 is a schematic structural diagram of a slot excluding a physical sidelink feedback channel (PSFCH) according to some embodiments of the present disclosure;
FIG. 10 is a schematic structural diagram of a slot including a PSFCH according to some embodiments of the present disclosure;
FIG. 11 is a schematic flowchart of a method for transmitting request messages according to some embodiments of the present disclosure;
FIG. 12 is schematic diagram of separate transmission of a first request message according to some embodiments of the present disclosure;
FIG. 13 is a schematic diagram of simultaneous transmission of a first request message and second sidelink data according to some embodiments of the present disclosure;
FIG. 14 is a schematic diagram of a state of having a sidelink transmission grant according to some embodiments of the present disclosure;
FIG. 15 is a schematic diagram of a state of not having a sidelink transmission grant according to some embodiments of the present disclosure;
FIG. 16 is a schematic block diagram of an apparatus for transmitting request messages according to some embodiments of the present disclosure;
FIG. 17 is another schematic block diagram of an apparatus for transmitting request messages according to some embodiments of the present disclosure; and
FIG. 18 is schematic structural diagram of a terminal device according to some embodiments of the present disclosure.

### DETAILED DESCRIPTION

For clearer description of the objects, technical solutions, and advantages of the present disclosure, the embodiments of the present disclosure are described in detail hereinafter in combination with the accompanying drawings.

The network architecture and business scenarios described in the embodiments of the present disclosure are intended to illustrate the technical solutions according to the embodiments of the present disclosure more clearly but do not limit the technical solutions. Those skilled in the art understand that with the evolution of the network architecture and the emergence of new business scenarios, the technical solutions according to the embodiments of the present disclosure are also applicable to addressing similar technical problems.

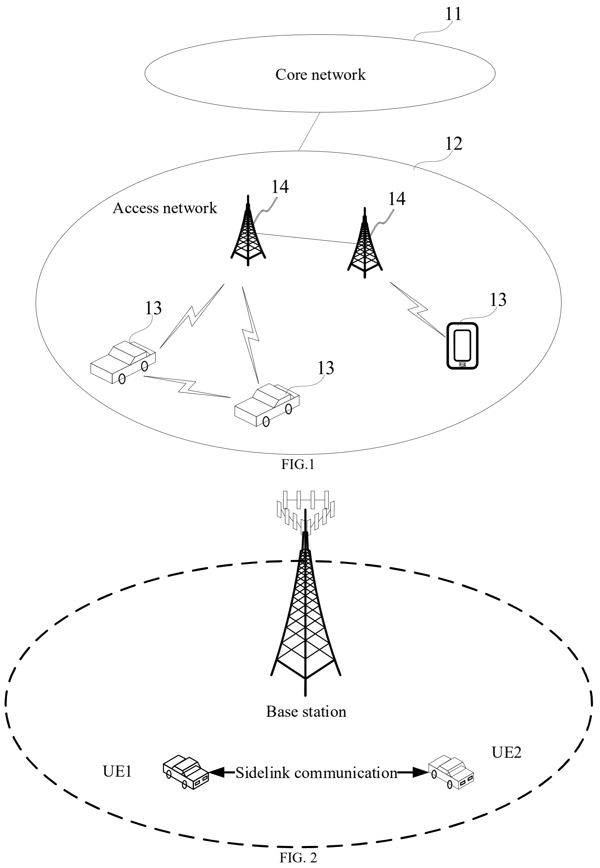

FIG. 1 is a block diagram of a network architecture according to some embodiments of the present disclosure. The network architecture involves a core network 11, an access network 12, and a terminal device 13.

The core network 11 includes several core network devices. Each of the core network devices mainly functions to provide user connection, user management, and service bearing, and is determined as a bearer network for providing an interface to an external network. For example, a core network of a 5G (5^{th} generation) NR (new radio) system includes an access and mobility management function (AMF) entity, a user plane function entity, a session management function (SMF) entity, and other devices.

The access network 12 includes several access network devices 14. The access network in the 5G NR system is also referred to as a new generation-radio access network (NG-RAN). Each of the access network devices 14 is a device deployed in the access network 12 and configured to provide a wireless communication function for the terminal device 13. The access network devices 14 include various types of macro base stations, micro base stations, relay stations, access points, and the like. In systems using different radio access technologies, the devices with the functionality of the access network device have different names, for example, gNodeBs, or gNBs in 5G NR systems. With the evolution of communications technologies, the name "access network device" changes. For convenient description, the devices providing the wireless communication function for the terminal device 13 are collectively referred to as the access network device in the embodiments of the present disclosure.

Generally, a plurality of terminal devices 13 are provided. One or more terminal devices 13 may be deployed in a cell managed by each of the access network devices 14. The terminal devices 13 includes various handheld devices, vehicle-mounted devices, wearable devices, computing devices or other processing devices connected to wireless modems, various forms of user equipment (UEs), mobile stations (MSs), and other devices with the wireless communication function. For convenient description, the devices are collectively referred to as the terminal device. The access network device 14 and the terminal device 13 communicate with each other using an air interface technology, such as a Uu interface.

The terminal device 13 and the terminal device 13 (for example, the vehicle-mounted device and other devices (such as other vehicle-mounted devices, mobile phones, road side units (RSU), or the like) communicate with each other over a direct communication interface (for example, a ProSe Communication 5 (PC5) interface), and the communication link established over the direct communication interface is accordingly referred to as a direct link or a sidelink (SL). SL communication indicates that communication data transmission between the terminal devices is achieved over the SL, which is different from the traditional cellular system in which the communication data is received or transmitted through the access network device. Thus, the SL communication has the characteristics of short delay and low overhead, and is suitable for communication between two terminal devices at near geographical locations (such as a vehicle-mounted device and other peripheral devices at near geographical locations). It should be noted that FIG. 1 is only illustrated using an example of the vehicle-to-vehicle communication in the V2X scenario, and the SL technology is applicable to the scenario where various terminal devices directly communicate with each other. In other words, the terminal device in the present disclosure is any device implementing the communication using the SL technology.

The "5G NR system" in the embodiments of the present disclosure is also referred to as a 5G system or an NR system, and those skilled in the art can understand the meaning. The technical solutions according to the embodiments of the present disclosure are applicable to the 5G NR system and evolved systems of the 5G NR system.

Before description of the technical solutions according to the present disclosure, some background technical knowledge involved in the present disclosure are introduced and explained first. The following related technologies, as optional solutions, may be combined arbitrarily with the technical solutions according to the embodiments of the present disclosure, which fall within the scope of protection of the embodiments of the present disclosure. The embodiments of the present disclosure include at least part of the following content.

### 1. SL communication under different network coverage environments

According to network coverage conditions of terminal devices, the SL communication may be categorized into in-coverage SL communication (all terminal devices are within network coverage), partial-coverage SL communication (not all terminal devices are within network coverage), out-of-coverage SL communication (none of the terminal devices is within network coverage), and SL communication centrally controlled by a central control node (the node implements management and scheduling in communication), respectively as illustrated in FIG. 2, FIG. 3, FIG. 4, and FIG. 5.

As illustrated in FIG. 2, in the in-coverage SL communication, all terminal devices (for example UE 1 and UE 2) involved in the SL communication are within a coverage range of a same base station. Therefore, the terminal devices may all perform SL communication based on a same SL configuration by receiving configuration signaling from the base station.

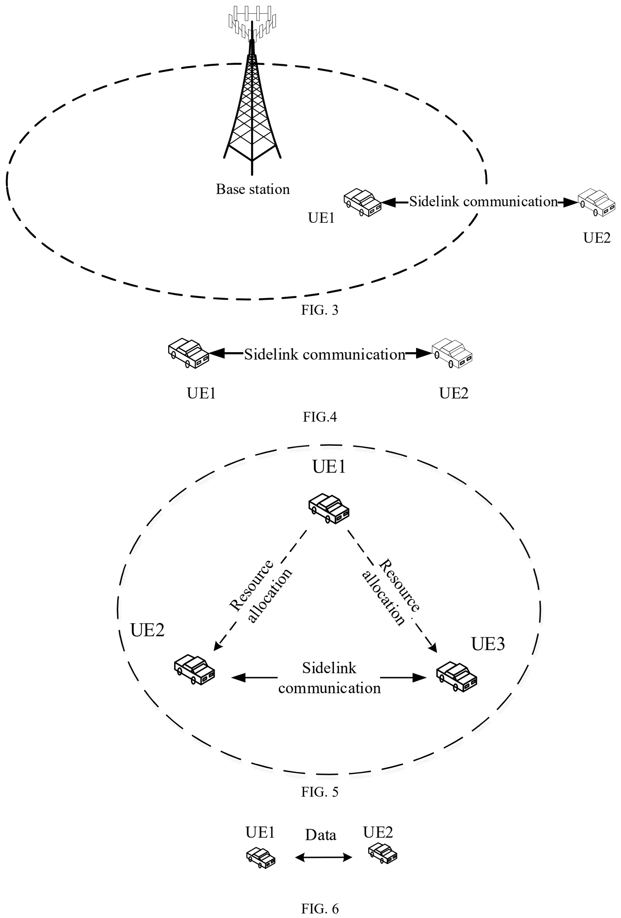

As illustrated in FIG. 3, in the partial-coverage SL communication, one (such as UE 1) of the terminal devices is positioned within the network coverage range of the base station, this terminal device is capable of receiving receive the configuration signaling from the base station, and performing SL communication based on a configuration of the base station. Meanwhile, the other (such as UE 2) of the terminal devices positioned outside the network coverage range fails to receive the configuration signaling from the base station; and in this case, the terminal device positioned outside the network coverage range may determine an SL configuration based on pre-configuration information and information carried in a physical sidelink broadcast channel (PSBCH) transmitted by the terminal device positioned within the network coverage range, thereby performing the SL communication.

As illustrated in FIG. 4, with regards to the out-of-coverage SL communication, all the terminal devices performing SL communication are positioned outside the network coverage range of the base station, and all the terminal devices determine the SL configuration based on the pre-configuration information, thereby performing the SL communication.

As illustrated in FIG. 5, regarding the SL communication centrally controlled by a central control node, a plurality of terminal devices (such as UE 1, UE 2, and UE 3) form a communication group, wherein the communication group possesses a central control node, alternatively referred to as a cluster header (CH). The cluster header possesses one of the following capabilities: forming the communication group; adding or removing members; performing resource coordination and allocating SL transmission resources to other terminal devices, receiving L feedback information from other terminal devices; performing resource coordination with other communication groups, and the like.

### 2. Device-to-Device (D2D)/Vehicle-to-everything (V2X)

D2D communication is a D2D-based SL transmission technology. Transmission or reception of communication data via the base station in D2D communication is different from that in a traditional cellular network. Therefore, the D2D communication possesses a superior spectrum efficiency and a lower transmission latency. A V2X system adopts terminal-to-terminal communication, defining two transmission modes in the related art: a first mode and a second mode.

In the first mode: transmission resources are allocated by the base station to the terminal device, and the terminal device performs data transmission on the SL based on the resources allocated by the base station; and the base station may allocate resources for a single transmission to the terminal device, or may allocate resources for a semi-static/passive transmission to the terminal device. As illustrated in FIG. 2, the terminal device is positioned within the network coverage range of the base station, wherein the transmission resources are allocated by the network to the network device for SL transmission.

In the second mode: the network device selects resources for data transmission from a resource pool. As illustrated in FIG. 4, the terminal device is positioned outside the network coverage range of the base station, wherein the terminal device selects the transmission resources from a pre-configured resource pool for SL transmission; or as illustrated in FIG. 2, the terminal device selects the transmission resources for SL transmission from the resource pool configured by the network.

### 3. NR-V2X

In NR-V2X, for self-driving, stringent requirements are being imposed on data exchange between vehicles, for example, a higher throughput, a lower latency, a higher reliability, an extended coverage, and a more flexible resource allocation.

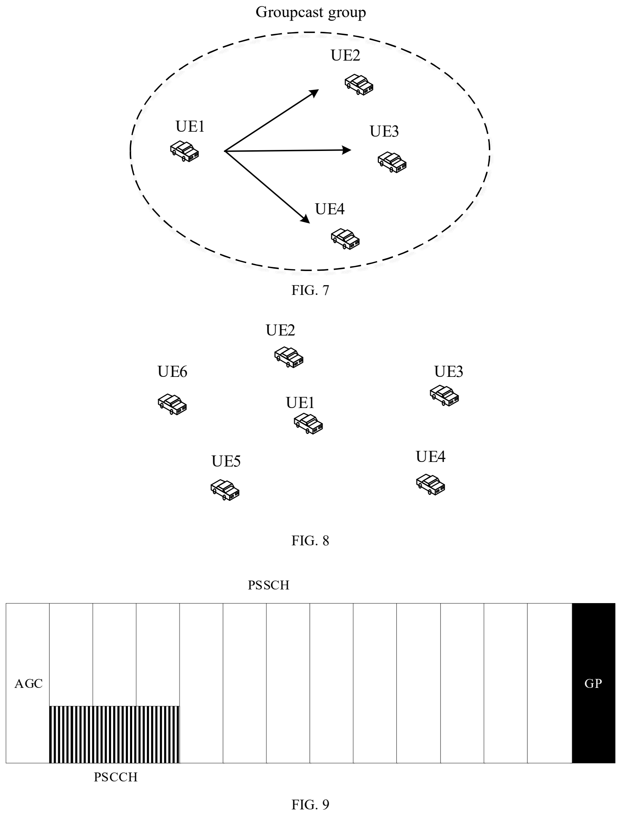

Broadcast transmission is supported in LTE-V2X, while in NR-V2X, unicast transmission and groupcast transmission have been introduced. Regarding the unicast transmission, receiver terminals merely include a single terminal device. As illustrated in FIG. 6, UE 1 and UE 2 performs the unicast transmission; and regarding the groupcast transmission, the receiver terminals include all the terminal devices within one communication group, or all the terminal devices positioned within a designated transmission range. As illustrated in FIG. 7, UE 1, UE 2, UE 3, and UE 4 form a communication group, wherein UE 1 transmits data, and all the other terminal devices are receiver terminals; and regarding the broadcast transmission, the receiver terminal is any one of the terminal devices around a transmitter terminal. As illustrated in FIG. 8, in a case where UE 1 is the transmitter terminal, all the other terminal devices around the transmitter terminal are the receiver terminals.

### 4. Frame structure in NR-V2X system

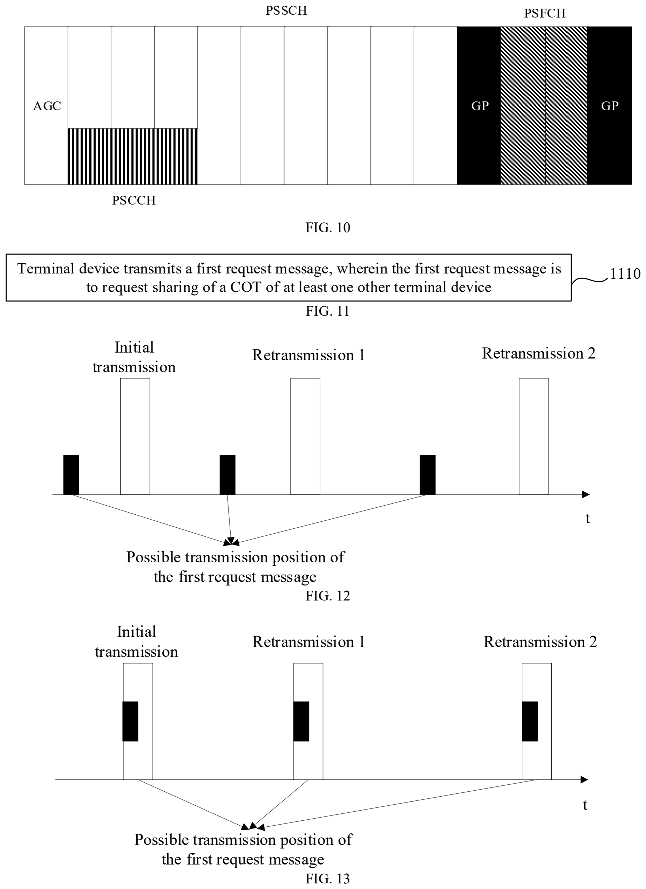

FIG. 9 illustrates a slot structure of a slot excluding a physical sidelink feedback channel (PSFCH). FIG. 10 illustrates a slot structure of a slot including a PSFCH.

As illustrated in FIG. 9, a physical sidelink control channel (PSCCH) begins at a second SL symbol of the slot in time domain in NR-V2X, and occupies 2 or 3 orthogonal frequency-division multiplexing (OFDM) symbols, and may occupy {10, 12, 15, 20, 25} physical resource blocks (PRBs) in frequency domain. In order to reduce the complexity of blind detection of the PSCCH by a UE, it is only allowed to configure a single number of PSCCH symbols and a single number of PRBs within one resource pool. Additionally, since the subchannel serves as the minimum unit for physical sidelink shared channel (PSSCH) resource allocation in NR-V2X, the number of PRBs occupied by the PSSCH needs to be lesser than or equal to the number of PRBs included in one subchannel within the resource pool, for the sake causing no additional limitations to PSSCH resource selection or allocation. The PSSCH also starts from a second SL symbol in the slot in time domain, a last time-domain symbol in the slot is a guard period (GP) symbol, and the remaining symbols are used to map the PSSCH. A first SL symbol in the slot is a repetition of the second SL symbol, the receiver terminal generally uses the first SL symbol as an automatic gain control (AGC) symbol, wherein data on the symbol is generally not used for data demodulation. The PSSCH occupies K subchannels on the frequency-domain, and each of the subchannels includes N contiguous PRBs.

As illustrated in FIG. 10, in a case where the slot includes the PSFCH, a second-to-last symbol and a third-to-last symbol in the slot are used for PSFCH transmission, and a time-domain symbol preceding the PSFCH serves as the GP symbol.

### 5. Unlicensed spectrum and LBT

An unlicensed spectrum is a communication spectrum available to wireless electric devices designated by national or regional authorities, this communication spectrum is commonly referred to as a shared spectrum, a communication device may operate on the spectrum on the premise of satisfying applicable regulatory requirements set upon the spectrum by national or regional authorities, but does not need to apply for an exclusive spectrum license from national or regional exclusive spectrum management authorities. The communication device observes a "listen-before-talk" principle to operate on the unlicensed spectrum, that is, satisfying regulatory requirements designated by various national or regional authorities.

For harmonious coexistence of various communication systems on an unlicensed spectrum, some national or regional authorities have established regulatory requirements for use of such spectrum. For example, the communication device needs to observe the "listen-before-talk" principle when performing communication on the unlicensed spectrum. This means that the communication device needs to perform an LBT procedure before performing signal transmission on the unlicensed spectrum or, i.e., channel sensing. The communication device may only perform signal transmission in a case where the channel sensing result indicates an idle state, or, i.e., upon a successful LBT procedure; the communication device cannot perform signal transmission in a case where the channel sensing result indicates a busy state, or, i.e., upon a failed LBT procedure. Additionally, in order to guarantee a fair use of a spectrum resource over a shared spectrum, a duration for communication transmission performed by the channel available to the communication device may not exceed a designated duration in a case where the LBT procedure is successful for the communication device on the unlicensed spectrum. By limiting a maximum communication duration following a successful LBT procedure, this mechanism may give different communication devices an opportunity to access the shared channel, thereby achieving harmonious coexistence of the different communication systems on the shared spectrum.

While channel listening is not a universal regulatory mandate, it is nonetheless considered an essential feature in the design of NR systems for operation in the unlicensed spectrum. This is due to its crucial role in providing interference avoidance and ensuring friendly coexistence for transmissions among communication systems within a shared spectrum environment. From a network deployment perspective, channel sensing includes two types of mechanisms, one type is load-based equipment (LBE) LBT, also referred to as dynamic channel sensing or dynamic channel occupancy, while the other is frame-based equipment (FBE) LBT, also referred to as semi-static channel sensing or semi-static channel occupancy.

### 6. Dynamic channel sensing

Dynamic channel sensing may also be understood as an LBE-based LBT. The dynamic channel sensing observes a channel sensing principle where the communication device performs an LBT procedure on an unlicensed spectrum carrier following an arrival of traffic, and subsequently, begins signal transmission on the carrier following a successful LBT procedure. The LBT dynamic channel sensing includes type-1 channel access and type-2 channel access. The type-1 channel access is a random back-off multi-slot channel detection with an adjustable contention window size, wherein a channel access priority class (CAPC) p may be selected based on a priority of transmission traffic priority. The type-2 channel access is channel access based on a fixed-length channel sensing, wherein the type-2 channel access includes type-2A channel access, type-2B channel access, and type-2C channel access. The type-1 channel access is mainly used for the communication device to initiate channel occupancy, and the type-2 channel access is mainly used for the communication device to share channel occupancy.

### Type-1 channel access:

The communication device needs to first sense a channel within a period T_{d}. Upon sensing that all sensing slots are idle and a N in the following procedure is equal to 0, the LBT procedure is then successful, and the communication device can occupy the channel for data transmission. Otherwise, the LBT procedure fails, and the communication device fails to access the channel.

Step 1: The communication device configures N=Nᵢₙᵢₜ, wherein Nᵢₙᵢₜ is a random value from 0 to CWₚ, and the process jumps to step 4.

Step 2: In a case where N>0, the communication device takes away 1 from N, and configures N=N-1.

Step 3: The communication device continues to sense a channel with a length within a sensing slot; and in a case where the channel is idle, the process jumps to step 4, and otherwise, the process jumps to step 5.

Step 4: In a case where N=0, the process stops; and otherwise, the process jumps to step 2.

Step 5: The communication device continues to sense the channel, until a sensing slot within the period T_{d} is sensed to be busy, or all of the sensing slots within the period T_{d} are sensed to be idle.

Step 6: In a case where all sensing slots within the period T_{d} are idle, the process jumps to step 4, and otherwise, the process jumps to step 5.

For the above steps, in a case where a jump is not clearly indicated, the steps are to be performed in order. A single sensing slot in the above aspect is a duration Tₛ₁, wherein Tₛ₁ is equal to 9 µs.

Nᵢₙᵢₜ is a random value from 0 to CWₚ. CWₚ is associated with a channel priority of a communication device. CWₚ may also be referred to as a designated priority corresponding contention window (CW), or a contention window based on priority determination. The communication device determines a value of CW_{min,p}, CW_{max, p}, and a value of a permitted CWₚ based on a channel access priority, i.e., the communication device determines a minimum value, a maximum value, and possible values of the contention window based on the priority. For example, In Table 1, in a case where the channel access priority is 3, the minimum value, maximum value, and the possible values of the contention window are 15, 1023, and {15, 31, 63, 127, 255, 511, 1023} respectively. In practice, the communication device maintains a corresponding contention window size regarding to each priority, adjusts the contention window corresponding to each priority according to the rules prior to performing step 1, and determines the contention window for a current LBT procedure according to the channel access priority, thereby determining Nᵢₙᵢₜ.

**Table 1: Channel Access Priority**

| Channel access priority (p) | mₚ | CW_{min,p} | CW_{max,p} | T_{mcot,p} | Permitted CWₚ value |
|---|---|---|---|---|---|
| 1 | 2 | 3 | 7 | 2 ms | {3, 7} |
| 2 | 2 | 7 | 15 | 4 ms | {7,15} |
| 3 | 3 | 15 | 1023 | 6 or 10 ms | {15, 31, 63, 127, 255, 511, 1023} |
| 4 | 7 | 15 | 1023 | 6 or 10 ms | {15, 31, 63, 127, 255, 511, 1023} |

In the aforementioned T_{d}=T_{f}+mₚ*Tₛ₁, wherein T_{f} is equal to 16 µs, and mₚ is related to the channel access priority. For example, mₚ may be determined from Table 1 based on the priority.

In a case where the communication device fails to immediately access the channel upon performing the aforementioned steps and a successful LBT, the communication device does not need to perform the entirety of the type-1 LBT procedure when requiring the channel access for data transmission. Instead, the communication device only requires sensing an occupancy state of a Ta+at least one channel within a Tₛₗ period; and in a case where the state is detected to be idle, the communication device may directly access the channel for signal transmission.

Upon a successful LBT and channel access, a duration of channel occupancy is referred to as a COT. In the COT, the communication device may continuously or non-continuously perform transmission, however a transmission time may not exceed a T_{mcot,p}. The T_{mcot,p} is related to the channel access priority, as listed in Table 1. The communication device does not need to transmit within the COT. Therefore, the communication device may share the COT to other devices, i.e., the communication device may transmit its own COT information to other devices, and subsequent to receiving the COT information, the other devices only need to perform the type-2 channel access to share and access the channel.

### Type-2 channel access:

### • Type-2A channel access:

A UE channel detection manner uses a 25-µs single slot channel detection. More specifically, using the type-2A channel access, the UE may perform the 25-µs channel sensing prior to transmission and perform transmission following the successful channel sensing.

### • Type-2B channel access:

A UE channel detection manner uses a 16-µs single slot channel detection. More specifically, using the type-2B channel access, the UE may perform the 16-µs channel sensing prior to transmission and perform transmission following the successful channel sensing, wherein a size of an interval between a start position of a current transmission and an end position of a previous transmission is 16 µs.

### • Type-2C channel access:

The UE performs transmission without channel detection after the end of the interval. More specifically, using the type-2C channel access, the UE may directly perform transmission, wherein a size of an interval between a start position of a current transmission and an end position of a previous transmission is less than or equal to 16 µs, and a duration of the transmission may not exceed 584 µs.

### 7. RedCap

Reduced capability (RedCap) is a 5G technology within the related technology. Compared to 4G, 5G has significant advantages in terms of communication speed, latency, reliability, and the like. However, this raises both the design complexity and cost of a terminal in consequence. High terminal costs make many practical commercial deployment scenarios unacceptable. In these scenarios, the communication requirements for the terminal devices are stringent and 5G at full capabilities is not required. However, stringent requirements are imposed on cost and power consumption. Therefore, for a balance between functionality and cost, and for better accommodation of the demands for lower cost and lower power consumption in the industrial internet and Internet of things, RedCap device types have been defined in the related arts. A RedCap terminal device may lower cost and power consumption of the terminal device by lowering a bandwidth, reducing a number of antennas, reducing a modulation level, and the like. In addition, two types of energy-saving mechanisms have been standardized in the related arts, and power consumption of the terminal device may be further reduced.

At present, standardization efforts are underway to deploy SL technology in unlicensed spectrum, known as SL-U technology. SL-U may be implemented in commercial scenarios such as smart wearable devices, smart homes, industrial Internet, and the like. Discussions assumes that all terminal have equal capabilities without considering reduced-capability terminals. However, cost and power consumption are crucial metrics for commercial deployment, and lower cost and lower power consumption offered by the reduced-capability terminals may facilitate commercialization of the SL-U technology. Therefore, standardizing the SL-U RedCap technology is worth considering. Consequently, from the perspective of low power consumption, how to optimize the energy efficiency remains an issue to be addressed.

When operating in the unlicensed spectrum, the SL-U terminal must perform LBT ahead of data transmission. The terminal needs to confirm a size of the random back-off counter when performing the type-1 channel access, wherein a value of N is a random value within CWₚ. For example, when CAPC is 4, a value of CWₚ is 1023, and assuming N=10000, the terminal performing type-1 channel access requires at least T_{d}+N*Tₛₗ = T_{f}+mₚ*Tₛₗ+N*Tₛₗ = 16+7*9 + 1000*9 = 9079 µs, which means that the RedCap terminal needs to listen for at least a continuous 9 ms, causing a high power consumption. Therefore, how to optimize the energy efficiency in the process of channel access remains an issue to be addressed.

Referring to FIG. 11, a schematic flowchart of a method for transmitting request messages according to some embodiments of the present disclosure is illustrated, which is applicable to a network structure in FIG. 1. The method is performed by a terminal device, and includes the following step 1110.

In step 1110, the terminal device transmits a first request message, wherein the first request message is used to request sharing of a COT of at least one other terminal device.

The COT refers a channel occupancy time following a successful channel access from the terminal device in a type-1 channel access mechanism. For example, the COT refers to a channel occupancy time following a successful channel access from the terminal device in a type-1 LBT procedure.

In some embodiments, the terminal device may continuously transmit data, or may discretely transmit data within the COT. In a scenario where the terminal device does not need to continuously transmit data, the terminal device may share the COT to other terminal devices, and the other terminal devices may perform a type-2 channel access mechanism on the shared COT. For example, the terminal devices may perform a type-2 LBT procedure on the shared COT.

At least one other terminal device may be the above other devices, a plurality of terminal devices may also be the above other devices, which is not limited in the present disclosure.

In some embodiments, the terminal transmits a first request message in a case where a first condition is satisfied, wherein the first condition includes at least one of:
the terminal device being a reduced-capability terminal device;
first SL data being available in a logic channel of the terminal device;
a value of a channel access priority corresponding to the first SL data in the logic channel of the terminal device being greater than or equal to a first threshold;
a value of a contention window corresponding to the first SL data in the logic channel of the terminal device being greater than or equal to a second threshold; or
a value of a random back-off counter in a type-1 channel access mechanism corresponding to the first SL data in the logic channel of the terminal device being greater than or equal to a third threshold.

A RedCap terminal device is a terminal device with lower communication capabilities and 5G at full capabilities is not required. In a common scenario, the RedCap terminal device lowers cost and power consumption by lowering a bandwidth, reducing a number of antennas, lowering a modulation level, and the like. The RedCap terminal device shares the COT of at least one other terminal device by transmitting the first request message to the at least one other terminal device, thereby reducing power required for the type-1 LBT procedure, and reducing power consumption.

The term "available first SL data" refers to the first SL data pending transmission, or the first SL data requiring transmission. The logic channel of the terminal device contains available SL data can be understood as the terminal device possesses the first SL data that needs to be transmitted.

Specific values of the first threshold, the second threshold, and the third threshold are not limited in the present disclosure. Exemplary, the first threshold is 3, i.e., the value of the channel access priority of the available first SL data in the logic channel of the terminal device is greater than or equal to 3. Exemplary, the second threshold is 15, i.e., the value of the contention window of the available first SL data in the logic channel of the terminal device is greater than or equal to 15.

More specifically, regarding the type-1 LBT procedure, the contention window needs to be determined based on the channel access priority corresponding to the first SL data available in the logic channel of the terminal device , and hence the type-1 LBT procedure is performed based on the contention window. Generally, the greater the value of the channel access priority, the greater the value of the contention window. In this way, a larger contention window is achieved, a duration required for the type-1 LBT procedure is prolonged, and the power consumption of the terminal device is increased. Conversely, in a case where the value of the channel access priority is smaller, the value of the contention window is smaller. In this case, the duration required for the type-1 LBT procedure is not long, the power consumption of the terminal device is lower, and thus there is no need to request sharing of COTs of other terminal devices.

As listed in Table. 1, the greater the value of the channel access priority, the lower the channel access priority; and the smaller the value of the channel access priority value, the higher the channel access priority.

Analogously, the value of the random back-off counter generated during the type-1 LBT procedure also influences the duration required for the type-1 LBT procedure, the greater the value of the random back-off counter, the longer the duration required for the type-1 LBT procedure, and the smaller the value of the random back-off counter, the shorter the duration required for the type-1 LBT procedure.

In some embodiments, the first threshold, the second threshold, and the third threshold are configured by a network, or are preconfigured, or depend on the implementation of the terminal device, or are predefined, which are not limited in the present disclosure.

The first condition may include one or a plurality of conditions. In a case where the condition includes a plurality of conditions, the conditions may be freely combined.

For example, the first condition may include: the terminal device being the RedCap terminal device; and the first SL data being available in the logic channel of the terminal device.

For example, the first condition may include: the terminal device being the RedCap terminal device; the first SL data being available in the logic channel of the terminal device; and the value of the channel access priority corresponding to the first SL data in the logic channel of the terminal device being greater than or equal to a first threshold;
For example, the first condition may include: the terminal device being the RedCap terminal device; the value of the contention window corresponding to the first SL data in the logic channel of the terminal device being greater than or equal to a second threshold; and the value of the random back-off counter in the type-1 channel access mechanism corresponding to the first SL data in the logic channel of the terminal device being greater than or equal to a third threshold.

Analogously, the present disclosure does not enumerate all cases herein.

In some embodiments, the first request message is carried via SL control information (SCI), or the first request message is carried via a medium access (MAC) control element (CE).

In some embodiments, the first request message may be carried via first-stage SCI, or via second-stage SCI, or via a combination of first-stage SCI and second-stage SCI.

In some embodiments, the MAC CE for carrying the first request message is assigned a highest priority.

In some embodiments, the resource for transmitting the first request message is allocated by the network, or is selected by the terminal device.

In some embodiments, whether the first request is carried via the SCI or the MAC CE, the terminal device needs to transmit a PSCCH along with an associated PSSCH to transmit the SCI or the MAC CE; and therefore, time-domain resources for transmitting the PSCCH and the associated PSSCH need to be determined. An SL transmission supports two modes. In a first mode, the terminal device transmits a scheduling request to the network device, and the network device allocates a resource for transmitting the SCI or the MAC CE. In a second mode, the terminal device selects a resource for transmitting the SCI or the MAC CE.

In some embodiments, the first request is transmitted via any one of: unicast, groupcast, or broadcast.

For example, the first request message is transmitted via unicast, and UE 1 unicasts the first request message to UE 2.

For example, the first request message is transmitted via groupcast, and UE 1 transmits the first request message to one of the terminal devices in a groupcast group, wherein the groupcast group includes UE 1, UE 2, and UE 3.

For example, the first request message is transmitted via broadcast, and UE 1 broadcasts the first request message to UE 2, UE 3, UE 4, and UE 5.

In some embodiments, the first request message includes at least one of:
first indication information indicating whether a COT request function is activated;
second indication information indicating a first channel access priority;
third indication information indicating a time-domain offset duration between a first preselected resource and information of the first request message;
fourth indication information indicating an index of a first resource block set; or
fifth indication information indicating a quantity of COTs requested.

Regarding a method for indicating a first indication information, the present disclosure does not impose a limitation upon this aspect. Exemplary, the indication information may indicate whether the terminal device has activated the COT request function via a "1" bit. For instance, a bit value 1 indicates that the terminal device has activated the COT request function; a bit value 0 indicates that the terminal device has not activated the COT request function. Exemplary, the first indication information may indicate whether the terminal device has activated the COT request function via a designated field. For instance, the designated field being carried by the first request message indicates that the terminal device has activated the COT request function; the designated being not carried by the first request message indicates that the terminal device has not activated the COT request function.

The COT request function is a function to request sharing of COTs of other terminal devices. Enabling the COT request function indicates that the terminal device possesses the function to request other terminal devices to share their COTs. Disabling the COT request indicates that the terminal device does not possess the function to request other terminal devices to share their COTs.

The first channel access priority may be used to determine the channel access priority for the type-1 LBT procedure initiated by the terminal device receiving the first request message. In some embodiments, the first channel access priority is lower than or equal to the channel access priority corresponding to the available first SL data in the logic channel of the terminal device that transmits the first request message. In other words, a first channel access priority value may be greater than or equal to a channel priority value corresponding to the available first SL data in the logic channel of the terminal device that transmits the first request message. Exemplary, the first channel priority may be the same as the channel access priority corresponding to the available first SL data in the logic channel of the terminal device that transmits the first request message, (i.e., the value of the first channel priority may be equal to the value of the channel access priority corresponding to the available first SL data in the logic channel of the terminal device that transmits the first request message). Alternatively, the first channel priority is lower than the channel access priority corresponding to the available first SL data in the logic channel of the terminal device that transmits the first request message (i.e., the first channel priority value is than the channel access priority value corresponding to the available first SL data in the logic channel of the terminal transmitting the first request message).

In some embodiments, the first channel access priority value is a random value.

In some embodiments, the first channel access priority is configured as a default value. For example, the first channel access priority value is 4 by default.

A first preselected resource is a transmission resource corresponding to the first SL data in the logic channel of the terminal device, i.e., the terminal device has completed a resource selection process, and the first SL data in the logic channel of the terminal device possesses a corresponding SL grant, therefore the terminal device may determine a time-frequency domain position of the PSCCH/PSSCH based on the SL data for transmission.

A time-domain offset duration between the first preselected resource and the transmission of the first request message may refer to the time-domain offset duration between a start time of the first preselected resource in the time domain and a start time of the transmission of the first request message, and the time-domain offset duration may also refer to the offset duration between a first slot of the first preselected resource and a first slot of the transmission of the first request message.

In some embodiments, the quantity of COT requests may be 1 and also be greater than 1, which is not limited in the present disclosure.

In some embodiments, a channel access mechanism for transmission of the first request message is a type-1 channel access mechanism or a type-2 channel access mechanism.

In the technical solutions according to the embodiments of the present disclosure, by transmitting a first request message, a terminal device may request sharing of COTs of other terminal devices, such that the terminal device implements a type-2 channel access mechanism by the shared COT instead of implementing a type-1 channel access mechanism. In this case, a channel sensing operation for performing the type-1 channel access mechanism is not required, and thus power consumption of the terminal device is reduced.

Regarding the method for transmitting the first request message, exemplary illustrations are also given in the embodiments of the present disclosure.

In some embodiments, the first request message may be transmitted separately, or may be transmitted simultaneously with second SL data.

In some embodiments, the first request message is transmitted separately.

The term "transmitted separately" means the first request message is not transmitted simultaneously with the SL data, i.e., the first request message is not positioned within the same slot as the SL data.

Exemplary, illustrated by FIG. 12, the first request message is transmitted before the SL data transmission.

In a case where the first request message is transmitted separately, the first request message includes at least one of:
first indication information indicating whether a COT request function is activated;
second indication information indicating a first channel access priority;
third indication information indicating a time-domain offset duration between a first preselected resource and transmission of the first request message;
fourth indication information indicating an index of a first resource block set; or
fifth indication information indicating a quantity of COTs requested.

In some embodiments, in a case where the first request message is transmitted separately, the first request message is assigned a highest channel access priority.

Exemplary, the channel access priority of the first request message is 1.

In some embodiments, the first request message and the second SL data are transmitted simultaneously.

Following a successful channel access by the type-1 or type-2 channel access, the terminal device transmits the first request message at the same time when transmitting the SL data, i.e., the first request message and the SL data are positioned in the same slot.

In some embodiments, the first SL data and the second SL data refer to SL data corresponding to different SL transmissions.

Exemplary, the first SL data and the second SL data may the SL data corresponding to an initial transmission or the SL data corresponding to a retransmission; may also be the SL data respectively corresponding to two retransmissions.

It should be clarified that the terms "first" and "second" are merely used to differentiate the SL data. The term "first sidelink data" is defined as sidelink data intended for transmission, wherein a transmission resource for the data has not yet been determined by an LBT procedure. The term "second sidelink data" is defined as sidelink data for which a transmission resource has been determined by an LBT procedure.

Exemplary, illustrated in FIG. 13, the first request message is transmitted simultaneously with the second SL data.

In a case where the first request message and the second SL data are transmitted simultaneously, the first request message includes at least one of:
the first indication information indicating whether the COT request function is activated; or
the second indication information indicating the first channel access priority.

In some embodiments, the channel access priority corresponding to the first request message and the channel access priority corresponding to the first SL data are the same.

In some embodiments, in a case where the available first SL data in the logic channel of the terminal device is already associated with a corresponding SL grant, the first request message may be transmitted separately, or may be transmitted simultaneously with the second side link data.

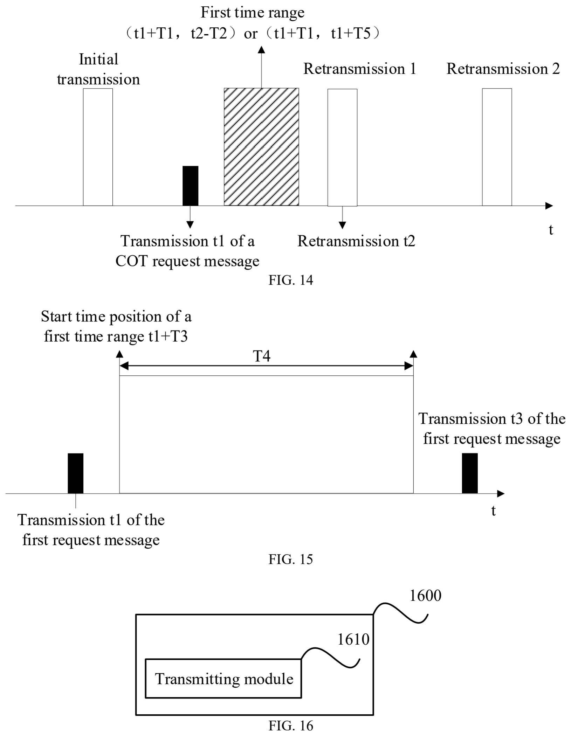

The SL grant, i.e., the completion of the resource selection process, the terminal device may determine the time-frequency domain position of the PSCCH/PSSCH for the SL data transmission. For example, as illustrated in FIG. 14, the resource for the SL data transmission is determined, and the terminal device may determine time-and frequency-domain positions of the PSCCH/PSSCH for the SL transmission.

In some embodiments, in a case where the available first SL data in the logic channel of the terminal device has not yet gained the corresponding SL grant, the first request message is transmitted separately.

In some embodiments, the terminal device may complete the resource selection process based on assistance of a received shareable COT. For example, determining the time domain wherein the resource for transmission of the available SL data in the logic channel of the transmission terminal device is positioned based on the slot belonging to the shareable COT.

In some embodiments, following step 1110, the method also includes step 1120.
step 1120, detecting, by the terminal device, the first request message corresponding to a first response message within a first time range wherein the first response message indicates or confirms the terminal device is allowed to transmit subsequent SL data by the type-2 channel access mechanism.

The first time range may be pre-configured, may be predefined, or may be determined based on implementation of the terminal device, which is not limited in the present disclosure.

In some embodiments, the first response message includes information identifying a shareable COT that is designated for the terminal device.

In some embodiments, the available first SL data in the logic channel of the terminal device already has the corresponding SL grant. A start time unit of the first time range is a time unit when the first request message is transmitted; or the start time unit of the first time range follows the time unit when the first request message is transmitted, and an interval between the start time unit of the first time range and the time unit when the first request message is transmitted is referred as a first offset duration. The end time unit of the first time range is the time unit when the first SL transmission occurs; or the end time unit of the first time range precedes the time unit when the first SL transmission occurs, and the interval between the end time unit of the first time range the time and the time unit when the first SL transmission occurs is referred to as a second offset duration. The first SL transmission follows the transmission of the first request message, and is the temporally closest SL to the transmission of the first request message.

As illustrated in FIG. 14, the first time range is (t1+T1, t2-T2), wherein t1 is the time unit of the first request message, t2 is the time unit when the first SL transmission occurs (retransmission 1), T1 is the first offset duration, and T2 is the second offset duration. Exemplary, T1 is great than 0. Exemplary, T1 is greater than or equal to 0. Exemplary, T2 is great than 0. Exemplary, T2 is greater than or equal to 0.

In a case where T1 is 0, the start time unit of the first time range is the time unit when the first request message is transmitted. In a case where T2 is 0, the end time unit of the first time range is the time unit when the first SL transmission occurs.

In some embodiments, the first offset duration and the second offset duration may be configured by the network, or may be pre-configured, or may depend on implementation of the terminal device, and may be predefined, which is not limited in the present disclosure.

In some embodiments, the available first SL data in the logic channel of the terminal device already has the corresponding SL grant. The start time unit of the first time range is the time unit when the first request message is transmitted, or the start time unit of the first time range follows the time unit when the first request message is transmitted, and an interval between the start time unit of the first time range and the time unit when the first request message is transmitted is referred as a first offset duration. The end time unit of the first time range follows the time unit of the first request message, and the interval between the end time unit of the first time range and the time of the first request message is referred to as a fourth offset, and the fourth offset duration is greater than the first offset duration.

As illustrated in FIG. 14, the first time range is (t1+T1, t1+T5), wherein t1 is the time unit of the first request message, T1 is the first offset duration, and T5 is the fourth offset duration. Exemplary, T1 is greater than 0, and T1 is greater than or equal to 0. Exemplary, T5 is greater than 0, and T5 is great than or equal to T1.

In a case where T1 is 0, the start unit of the first time range is the time unit when the first request message is transmitted.

In some embodiments, the first offset duration and the fourth offset duration may be configured by the network, or may be pre-configured, or may depend on implementation of the terminal device, or may be predefined, which is not limited in the present disclosure.

In some embodiments, the aforementioned time unit refers to the slot.

From the transmission of the first request message, to the other terminal devices receiving the first request message, and transmitting the first response message to the terminal transmitting the first request message, this process has a certain latency, therefore, detection for the first response message can be performed again following the transmission of the first request message.

In some embodiments, upon receiving the first request message, in a case where the other terminal devices have a shareable COT, the other terminal devices transmit the first response message to the terminal device that transmits the first request message.

In some embodiments, upon receiving the first request message, in a case where the terminal devices do not have a shareable COT, the other terminal devices perform the type-1 LBT procedure based on the first request message, and upon acquiring shareable COT, the other terminal devices transmit the first response message to the terminal device that transmits the first request message. For example, the type-1 LBT procedure is performed based on the first channel access priority included in the first request message.

Regarding the first offset duration value, the present disclosure does not impose a limit upon this aspect. Exemplary, the first offset duration may be determined by referring to a transmission latency between the terminal device that transmits the first request message and the other terminal device.

In some embodiments, the method also includes step 1130.

Step 1130, in a case where the first response message is detected within the first time range, the terminal device transmits subsequent SL data via the type-2 channel access mechanism based on the first request message; or, in a case where the first response message is not detected within the first time range, the terminal device discards the last transmission temporally closest to the first request message, or uses the type-1 channel access mechanism to perform channel access, or triggers channel resource reselection.

In some embodiments, in a case where the first response message is detected within the first time range, the terminal device performs the type-2 LBT procedure based on the first request message, used for one or multiple SL transmission of subsequent transmissions. For example, used to perform the first SL transmission.

In some embodiments, in a case where the first response message is not detected within the first time range, the terminal device performs the type-1 LBT procedure to acquire the required COT for the SL data transmission.

In some embodiments, the second offset duration is greater than or equal to a required duration for the type-1 channel access mechanism used by the terminal device for channel access. In some embodiments, the second offset duration may be determined by referring the required duration needed for the type-1 LBT procedure. Exemplary, the second offset duration is greater than or equal to the required duration of the type-1 LBT procedure performed by the terminal device, thus the terminal device may perform the type-1 LBT procedure in a case where the first response message is not detected within the first time range.

In some embodiments, the interval between the end time unit of the first time range and the time unit when the first SL transmission occurs is greater than or equal to the required duration of the type-1 channel access mechanism performed by the terminal device for channel access. The interval between the end time unit of the first time range and the time unit when the first SL transmission occurs refers to a length of the interval between the end time unit of the first time range and the time unit when the first SL transmission occurs.

In some embodiments, the fourth offset duration may be determined by referring to the required duration of the type-1 LBT procedure performed by the terminal device. Exemplary, the interval between the end time unit of the first time range and the time unit when the first SL transmission occurs is greater than or equal to the required duration of the type-1 LBT procedure performed by the terminal device, thus the terminal device may perform the type-1 LBT procedure in a case where the first response message is not detected within the first time range.

An interval of the aforementioned second offset duration and an interval of the interval between the end time unit of the first time range and the time unit when the first SL transmission occurs are the same interval.

In some embodiments, in a case where the first response message is not detected within the first time range, the terminal device discards the SL transmission temporally closest to the transmission of the first request message. As illustrated in FIG. 14, the terminal device discards the first SL transmission.

In some embodiments, in a case where the first response message is not detected within the first time range, the terminal triggers resource reselection in order to reselect a new resource for the SL transmission temporally closest to the transmission of the first request message.

In some embodiments, the aforementioned step 1120 and step 1130 are performed again upon resource reselection in order to acquire a shareable COT used for the SL transmission temporally closest to the transmission of the first request message.

By the above method, the terminal device acquires a shareable COT under a scenario where the SL data available in the logic channel of the terminal device is already associated with the corresponding SL grant, such that power consumption is reduced.

In some embodiments, the SL data available in the logic channel of the terminal device is not yet associated with the corresponding SL grant. The start time unit of the first time range is the time unit when the first request message is transmitted; or, the start time unit of the first time range follows the time unit when the first request message is transmitted, and the interval between the start time unit of the first time range and the time unit when the first request message is transmitted is referred to as a third offset duration. A length of the first time range is referred to as a first duration.

Illustratively, in FIG. 15, the start time unit of the first time range is (t1+T3), the first duration is T4. Wherein t1 is the time unit when the first request message is transmitted, and T3 is the third offset duration. Exemplary, T3 is greater than 0. Exemplary, T3 is greater than or equal to 0. Exemplary, T4 is greater than 0.

In a case where T3 is 0, the start time unit of the first time range is the time unit when the first request message is transmitted.

In some embodiments, the third offset duration may be configured by the network, or may be preconfigured, or may depend on implementation of the terminal device, or may be predefined, which is not limited in the present disclosure.

In some embodiments, the first duration may be configured by the network, or may be pre-configured, or may depend on implementation of the terminal device, or may be predefined, which is not limited in the present disclosure.

In some embodiments, the time unit may refer to a slot.

In some embodiments, upon receiving the first request message, in a case where the other terminal devices have a shareable COT, each of the other terminal devices transmits a first response message to the terminal device that transmits the first request message.

In some embodiments, upon receiving the first request message, in a case where the other terminal devices do not have a shareable COT, each of the other terminal devices performs the type-1 LBT procedure based on the first request message; and upon acquiring a shareable COT, each of the other terminal devices transmits a first response message to the terminal device that transmits the first request message. For example, the type-1 LBT procedure is performed based on the first channel access priority included in the first request message.

The present disclosure does not impose a limitation regarding the value of the third offset duration. Exemplary, the third offset duration may be determined by referring to the transmission latency between the terminal that transmits the first request message and the other terminal devices.

In some embodiments, the method further includes step 1140.

In step 1140, in a case where the first response message is detected within the first time range, the terminal device performs resource selection based on the first response message; or, in a case where the first response message is not detected within the first time range, the terminal device transmits the first request message again following the first time range.

In some embodiments, in a case where the first response message is detected within the first time range, the terminal device performs resource selection based on the first response message. For example, the first response message includes information identifying a shareable COT, and the terminal device randomly selects a resource within the shareable COT.

In some embodiments, in a case where the first response message is not detected within the first time range, the terminal device transmits the first request message again following the first time range. Illustratively, in FIG. 15, the first request message is transmitted again following the first time range.

In some embodiments, a number of continuous transmissions of the first request message by the terminal device does not exceed a fourth threshold. The specific value of the fourth threshold is not specifically limited in the present disclosure.

A continuous transmission of the first request message refers to not performing SL transmission in-between two first request transmissions.

The fourth threshold may be configured by the network, or may be pre-configured, or may depend on implementation of the terminal device, or may be predefined, which is not limited in the present disclosure.

By the above method, the terminal device acquires a shareable COT under a scenario where the SL data available in the logic channel of the terminal device is not yet associated with the corresponding SL grant, such that power consumption is reduced.

Regarding steps 1120 to 1140, the present disclosure has additionally provided several alternative solutions.

In the above embodiments, the other terminal devices feed back the first response message solely to the terminal device, wherein the first response message indicates or confirms that the terminal device is allowed to transmit subsequent SL data via the type-2 channel access mechanism.

In some embodiments, the other terminal devices may also feed back a second response message to the terminal device, wherein the second response message indicates or confirms that the terminal device is not allowed transmit subsequent SL data via the type-2 channel access mechanism.

In some embodiments, in step 1120, the terminal device detects a response message associated with the first request message, the response message including a first response message and a second response message, wherein the first response message indicates or confirms that the terminal device is allowed to transmit subsequent SL data via the type-2 channel access mechanism.

In some embodiments, for step 1130, in a case where the first SL data available in the logic channel of the terminal device already has the associated SL grant, the following scenarios apply.

In some embodiments, the first request message is transmitted via unicast. In such a case, wherein the first response message is not detected within the first time range includes: no response message is detected within the first time range; the second response message is detected within the first time range while the first response message is not detected.

In some embodiments, in a case where the second response message is detected within the first time range, the terminal device discards the SL transmission temporally closest to the first request message, or performs channel access using the type-1 channel access mechanism, or triggers resource reselection.

In some embodiments, the first response message is transmitted via groupcast or broadcast. In such cases, wherein the first response message is not detected within the first time range includes: no response message is detected within the first time range; the second response message is detected within the first time range while the first response message is not detected.

In some embodiments, in a case where the second response message is detected within the first time range, the terminal device continues to detect the response message associated with the first request message within the first time range until the first response message is detected, and the terminal device transmits subsequent SL data via the type-2 channel access mechanism based on the first response message.

In some embodiments, in a case where the second response message is detected within the time range while the first response message is not detected, the terminal device discards the SL transmission temporally closest to the transmission of the first request message, or performs channel access using the type-1 channel access mechanism, or triggers resource reselection.

In some embodiments, in a case where the second response message is detected within the first time range, the terminal discards the SL transmission temporally closest to the transmission of the first request message, or performs channel access using the type-1 channel access mechanism, or triggers resource reselection.

In some embodiments, the first SL data available in the logic channel of the terminal device is not yet associated with the corresponding SL grant, the following scenarios exist regarding step 1140.

In some embodiments, the first request message is transmitted via unicast. In such a case, the first response message is not detected within the first time range includes: no response message is detected within the first time range; the second response message is detected within the first time range while the first response message is not detected.

In some embodiments, in a case where the second response message is detected within the first time range, the terminal device transmits the first request message again within the first time range.

In some embodiments, the first request message is transmitted via groupcast or broadcast. In such cases, the first request message is not detected within the first time range includes: no response message is detected within the first time range; the second response message is detected within the first time range while the first response message is not detected.

In some embodiments, the second response message is detected within the first time range, the terminal device continues to detect the response message associated with the first request message within the first time range until the first response message is detected, and the terminal device performs resource selection based on the first response message.

In some embodiments, the second response message is detected within the first time range while the first response is not detected, and the terminal device transmits the first request message again within the first time range.

In some embodiments, the second response message is detected within the first time range, and the terminal device transmits the first request message again within the first time range.

The technical solutions according to the embodiments of the present disclosure offer alternative solutions based on different cases while detecting for the first response message within the first time range. This is to assist the terminal device in acquiring a shareable COT from other terminal devices to reduce power consumption.

The following describes in detail apparatus embodiments of the present disclosure, which may be used to implement the method embodiments of the present disclosure. For details not disclosed in the apparatus embodiments, reference may be made to the method embodiments of the present disclosure.

Referring to FIG. 16, a block diagram of an apparatus for transmitting request messages is illustratively according to some embodiments of the present disclosure. The apparatus possesses the request message transmission function described in the method embodiments above, the function may be implemented via hardware or via hardware running associated software. The apparatus may be the terminal device as mentioned above, or may be configured within the terminal device. As illustrated in FIG. 16, the apparatus may include: a transmitting module 1610.

The transmitting module 1610 is configured to transmit a first request message, wherein the first request message is used to request sharing of a COT of at least one other terminal device.

In some embodiments, the terminal device transmits the first request message in a case where a first condition is satisfied, wherein the first condition includes at least one of:
the terminal device being a reduced-capability terminal device;
first SL data being available in a logic channel of the terminal device;
a value of a channel access priority corresponding to the first SL data in the logic channel of the terminal device being greater than or equal to a first threshold;
a value of a contention window corresponding to the first SL data in the logic channel of the terminal device being greater than or equal to a second threshold; or
a value of a random back-off counter in a type-1 channel access mechanism corresponding to the first SL data available in the logic channel of the terminal device being greater than or equal to a third threshold.

In some embodiments, the first request message includes at least one of:
first indication information indicating whether a COT request function is activated;
second indication information indicating a first channel access priority;
third indication information indicating a time-domain offset duration between a first preselected resource and transmission of the first request message;
fourth indication information indicating an index of a first resource block set; or
fifth indication information indicating a quantity of COTs requested.

In some embodiments, the first request message is carried via SL control information (SCI), or carried via a medium access control (MAC) control element (CE).

In some embodiments, the resource for transmitting the first request message is allocated by the network device, or selected by the terminal device.

In some embodiments, the first request message is transmitted via any one of: unicast, groupcast, or broadcast.

In some embodiments, a channel access mechanism for the first request message is a type-1 channel access mechanism or a type-2 channel access mechanism.

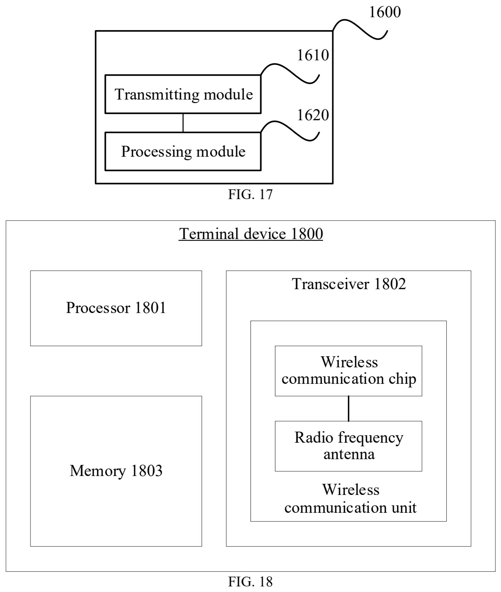

In some embodiments, as illustrated in FIG. 17, the apparatus 1600 also includes: a processing module 1620.

The processing module 1620 is configured to detect a first response message associated with the first request message within a first time range, wherein the first response message indicates or confirms that the terminal device is allowed to transmit subsequent SL data via the type-2 channel access mechanism.

In some embodiments, the SL data available in the logic channel of the terminal device is already associated with a corresponding SL grant;

A start time unit of the first time range is the time unit when the first request message is transmitted; or the start time unit of the first time range follows the time unit when the first request message is transmitted, and the interval between the start time unit of the first time range and the time unit when the first request message is transmitted is referred to as a first offset duration;

An end time unit of the first time range is the time unit containing a first SL transmission; or the end time unit of the first time range precedes the time unit when the first SL transmission occurs, and the interval between the end time unit of the first time range and the time unit when the first SL transmission occurs is referred to as a second offset duration. The first SL transmission follows the transmission of the first request message, and is the SL transmission temporally closest to the transmission of the first request message.

In some embodiments, the second offset duration is greater than or equal to a required duration for the type-1 channel access mechanism used by the terminal device for channel access.

In some embodiments, the available first SL data in the logic channel of the terminal device is already associated with the corresponding SL grant.

The start time unit of the first time range is the time unit when the first request message is transmitted; or the start time unit of the first time range follows the time unit when the first request message is transmitted, and an interval between the start time unit of the first time range and the time unit when the first request message is transmitted is referred to as the first offset duration;

The end time unit of the first time range follows the time unit when the first request message is transmitted, and an interval between the time unit when the first request message is transmitted and the end time unit of the first time range is referred to as a fourth offset duration, wherein the fourth offset duration is greater than the first offset duration.

The end time unit precedes the time unit when the first SL transmission is performed; and/or the interval between the end time unit and the time unit when the first SL transmission is performed is greater than or equal to the duration required for the terminal device to perform channel access using a type-1 channel access mechanism, wherein the first SL transmission is an SL transmission that follows the transmission of the first request message, and is temporally closest to the transmission of the first request message.

In some embodiments, the first SL data available in a logic channel of the terminal device is not yet associated with a corresponding SL grant.

A start time unit of the first time range is a time unit when the first request message is transmitted or follows the time unit when the first request message is transmitted, wherein an interval between the time unit when the first request message is transmitted and the start time unit of the first time range is referred to as a third offset duration;

A length of the first time range is referred to as a first duration.

In some embodiments, the processing module 1620 is further configured to transmit, in a case where the first response message is detected within a first time range, subsequent SL data based on the first response message using a type-2 channel access mechanism; or, the processing module 1620 is further configured to discard, in a case where the first response message is not detected within the first time range, the SL transmission temporally closest to the transmission of the first request message, or to perform channel access using a type-1 channel access mechanism, or to trigger resource reselection.

In some embodiments, the processing module 1620 is further configured to select, in a case where the first request message is detected within the first time range, a resource based on the first response message; or, the processing module 1620 is further configured to transmit again, in a case where the first response message is not detected within the first time range, the first request message subsequent to the first time range.

In some embodiments, the first request message is transmitted separately; or the first request message and second SL data are transmitted simultaneously.

In some embodiments, in a case where the first request message is transmitted separately, the first request message is assigned a highest channel access priority.

In the technical solutions according to the embodiments of the present disclosure, by transmitting a first request message, a terminal device may request sharing of COTs of other terminal devices, such that the terminal device implements a type-2 channel access mechanism by the shared COT instead of implementing a type-1 channel access mechanism. In this case, a channel sensing operation for performing the type-1 channel access mechanism is not required, and thus power consumption of the terminal device is reduced.

It should be noted that the apparatus according to the embodiments of the present disclosure implements its functionality solely based on the division of the functional modules exemplarily. In practice, the described functions may be allocated to different modules as needed, i.e., the internal structure of a device may be divided into different functional modules in order to perform all or part of the aforementioned functionality.

Regarding the apparatus described in the above embodiments, the specific operations performed by each module have already been described in detail in the corresponding method embodiments of the present disclosure, which are not elaborated herein.

Referring to FIG. 18, a schematic structural diagram of a terminal device according to some embodiments of the present disclosure. The terminal device 1800 may include: a processor 1801, a transceiver 1802, and a memory 1803. The processor 1801 is configured to perform the function of the processing module 1620, and the transceiver is 1802 is configured to perform the function of the transmitting module 1610.

The processor 1801 includes one or a plurality of processing cores, and performs different functional applications and information processing by running the software programs and the modules. The processor 1801 is configured to perform all the steps performed by the terminal device in the method embodiments above except for transmission and reception steps.

The transceiver 1802 may include a receiver and a transmitter. For example, the receiver and the transmitter may be implemented as a single wireless communication unit, wherein the wireless communication unit may include a wireless communication chip and a radio frequency antenna. The transceiver 1802 is configured to perform the transmission and/or reception steps performed by the terminal device in the method embodiments above.

The memory 1803 may be communicably connected to the processor 1801 and the transceiver 1802.

The memory 1803 may be configured to store one or more computer programs loadable and runnable by the processor. The processor 1801 is configured to load and run the one or more computer programs to perform all steps in the method embodiments above.

Furthermore, the memory may be implemented using various types of transitory or non-transitory storage devices, or a combination thereof, including but not limited to: a magnetic or optical disk, an electrically erasable programmable read-only memory (EEPROM), an erasable programmable read-only memory (EPROM), a static random-access memory (SRAM), a read-only memory (ROM), a magnetic storage device, a flash memory, and a programmable read-only memory (PROM).

In some embodiments, the transceiver 1802 is configured to transmit the first request message, wherein the first request message is used to request sharing of a COT of at least one other terminal device.

For details not disclosed in the embodiments, reference may be made to the embodiments of the present disclosure above, which are not elaborated herein.

Some embodiments of the present disclosure further provide a computer-readable storage medium used to store computer programs, which, when run by a processor, performs the above method for transmitting a request message. In some embodiments, the storage medium may include: a read-only memory, a random-access memory (RAM), a solid state drives (SSD), or the like optical disk. The random-access memories may include: a resistance random-access memory (ReRAM) or a dynamic random-access memory (DRAM).

Some embodiments of the present disclosure further provide a chip. The chip includes programmable electric circuitry and/or one or more program instructions. The chip is configured to load and run the one or more program instructions to perform the method for transmitting request messages in the method embodiments above.

Some embodiments of the present disclosure further provide a computer program product. The computer program product includes one or more computer programs stored in a computer-readable storage medium, wherein the one or more computer programs, when loaded and run by a processor, cause the processor to perform the method for transmitting request messages in the method embodiments above.

It should be understood that the term "indication" mentioned in the embodiments of the present disclosure is a direct indication, an indirect indication, or an indication that there is an association relationship. For example, A indicates B, which may mean that A indicates B directly, e.g., B may be acquired by A, or that A indicates B indirectly, e.g., A indicates C by which B may be acquired, or that an association relationship is present between A and B.

In the description of the embodiments of the present disclosure, the term "correspond" indicates a direct or indirect corresponding relationship between two items, or indicates an associated relationship between two items; and also indicates relationships such as indicating and being indicated, or configuring and being configured.

In some embodiments of the present disclosure, the term "predefined" is implemented by pre-storing corresponding codes, tables, or other means that may be defined to indicate related message in devices (including, for example, terminal devices and network devices), and the present disclosure does not limit the specific implementation thereof. For example, the term "predefined" refers to being "defined" in a protocol.

In some embodiments of the present disclosure, the term "protocol" refers to a standard protocol in the communication field including, for example, the LTE protocol, the NR protocol, and related protocols applied in the future communication systems, which is not limited in the present disclosure.

The mentioned term "a plurality of" herein means two or more. The term "and/or" describes the association relationship between the associated objects, and indicates that three relationships may be present. For example, the phrase "A and/or B" means (A), (B), or (A and B). The symbol "/" generally indicates an "or" relationship between the associated objects.

Reference herein to "greater than or equal to" may indicate greater than or equal to or just greater than, and "less than or equal to" may indicate less than or equal to or just less than.

In addition, serial numbers of the processes described herein only show an exemplary possible sequence of performing the processes. In some other embodiments, the processes may also be performed out of the numbering sequence, for example, two process with different serial numbers are performed simultaneously, or two processes with different serial numbers are performed in reverse order to the illustrated sequence, which is not limited in the present disclosure.

Those skilled in the art should understand that in one or more of the above embodiments, the functions described in the embodiments of the present disclosure may be implemented in hardware, software, firmware, or any combination thereof. The functions, when implemented in software, may be stored in a computer-readable medium or transmitted as one or more instructions or codes on a computer-readable medium. The computer-readable medium includes a computer storage medium and a communication medium, where the communication medium includes any medium that facilitates the transfer of a computer program from one place to another. The storage medium is any available medium that is accessible by a general-purpose or special-purpose computer.

Described above are merely exemplary embodiments of the present disclosure and are not intended to limit the present disclosure. Any modifications, equivalent substitutions, improvements and the like, made within the spirit and principle of the present disclosure should fall within the protection scope of the present disclosure.

## Claims

1. A method for transmitting a request message, performed by a terminal device, the method comprising:
transmitting a first request message, wherein the first request message is used to request sharing of a channel occupancy time (COT) of at least one other terminal device.

2. The method according to claim 1, wherein the terminal device transmits the first request message in a case where a first condition is satisfied, wherein the first condition comprises at least one of:
the terminal device being a reduced-capability terminal device;
first sidelink data is available in a logic channel of the terminal device;
a value of a channel access priority corresponding to the first sidelink data in the logic channel of the terminal device being greater than or equal to a first threshold;
a value of a contention window corresponding to the first sidelink data in the logic channel of the terminal device being greater than or equal to a second threshold; or
a value of a random back-off counter in a type-1 channel access mechanism corresponding to the first sidelink data in the logic channel of the terminal device being greater than or equal to a third threshold.

3. The method according to claim 1 or 2, wherein the first request message comprises at least one of:
first indication information indicating whether a COT request function is activated;
second indication information indicating a first channel access priority;
third indication information indicating a time-domain offset duration between a first preselected resource and transmission of the first request message;
fourth indication information indicating an index of a first resource block set; or
fifth indication information indicating a quantity of COT requested.

4. The method according to any one claims 1 to 3, wherein the first request message is carried via sidelink control information (SCI), or carried via a medium access control (MAC) control element (CE).

5. The method according to any one of claims 1 to 4, wherein a resource for transmitting the first request message is allocated by a network device, or selected by the terminal device.

6. The method according to any one of claims 1 to 5, wherein the first request message is transmitted via any one of: unicast, groupcast, or broadcast transmission.

7. The method according to any one of claims 1 to 6, wherein a channel access mechanism for the first request message is a type-1 channel access mechanism or a type-2 channel access mechanism.

8. The method according to any one of claims 1 to 7, wherein upon transmission of the first request message, the method further comprises:
detecting within a first time range, a first response message corresponding to the first request message, wherein the first response message indicates or confirms the terminal device is allowed to transmit subsequent sidelink data by a type-2 channel access mechanism.

9. The method according to claim 8, wherein
first sidelink data available in a logic channel of the terminal device is already associated with a corresponding sidelink grant;
a start time unit of the first time range is a time unit when the first request message is sent; or the start time unit of the first time range follows the time unit when the first request message is sent, and an interval between the time unit when the first request message is transmitted and the start time unit of the first time range is referred to as a first offset duration; and
an end time unit of the first time range is a time unit when a first sidelink transmission occurs; or the end time unit of the first time range precedes the time unit when the first sidelink occurs, and the interval between the time unit when the first sidelink transmission occurs and the end time unit of the first time range is referred to as a second offset duration; wherein the first sidelink transmission follows the transmission of the first request message, and is the temporally closest sidelink transmission to a transmission of the first request message.

10. The method according to claim 9, wherein the second offset duration is greater than or equal to a duration required for the terminal device to perform channel access using a type-1 channel access mechanism.

11. The method according to claim 8, wherein
first sidelink data available in a logic channel of the terminal device is already associated with corresponding sidelink grant;
a start time unit of the first time range is a time unit when the first request message is transmitted; or the start time unit of the first time range follows the time unit when the first request message is transmitted, and an interval between the time unit when the first request message is transmitted and the start time unit of the first time range is referred to as a first offset duration; and
an end time unit of the first time range follows the time unit when the first request message is transmitted, and the interval between the time unit when the first request message is transmitted and the end time unit of the first time range is referred to as a fourth offset duration, wherein the fourth offset duration is greater than the first offset duration.

12. The method according to claim 11, wherein
the end time unit precedes the time unit containing a first sidelink transmission; and/or
the interval between the end time unit and the first sidelink transmission is greater than or equal to a duration required for the terminal device to perform channel access using a type-1 channel access mechanism;
wherein the first sidelink transmission follows the transmission of the first request message, and is the temporally closest sidelink transmission to a transmission of the first request message.

13. The method according to claim 8, wherein
first sidelink data available in a logic channel of the terminal device does not yet have a corresponding sidelink grant;
a start time unit of the first time range is a time unit when the first request message is transmitted; or the start time unit of the first time range follows the time unit when the first request message is transmitted, and an interval between the time unit when the first request message is transmitted and the start time unit of the first time range is a third offset duration;
wherein a length of the first time range is a first duration.

14. The method according to any one of claims 8 to 12, further comprising:
in a case where a first response message is detected within a first time range, transmitting subsequent sidelink data based on the first response message by a type-2 channel access mechanism; or
in a case where the first response message is not detected within the first time range, discarding sidelink data transmission temporally closest to transmission of the first request message, or performing channel access using a type-1 channel access mechanism, or triggering resource reselection.

15. The method according to claims 8 or 13, further comprising:
in a case where a first response message is detected within a first time range, selecting a resource based on the first response message; or
in a case where the first response message is not detected within the first time range, transmitting again the first request message subsequent to the first time range.

16. The method according to any of claims 1 to 8, wherein
the first request message is transmitted separately; or
the first request message and second sidelink data are transmitted simultaneously.

17. The method according to claim 16, in a case where the first request message is transmitted separately, the first request message is assigned a highest channel access priority.

18. An apparatus for transmitting a request message, wherein the apparatus comprising:
a transmitting module, configured to transmit a first request message, wherein the first request message is configured to request sharing of a channel occupancy time (COT) of at least one other terminal device.

19. The apparatus according to claim 18, wherein the terminal device transmits under a first condition, the first request message, and the first condition comprising at least one of:
the terminal device being a reduced-capability terminal device;
first sidelink data being available in a logic channel of the terminal device;
a value of a channel access priority corresponding to the first sidelink data in the logic channel of the terminal device being greater than or equal to a first threshold;
a value of a contention window corresponding to the first sidelink data in the logic channel of the terminal device being greater than or equal to a second threshold; or
a value of a random back-off counter in a type-1 channel access mechanism corresponding to the first sidelink data in the logic channel of the terminal device being greater than or equal to a third threshold.

20. The apparatus according claims 18 or 19, wherein the first request message comprises at least one of:
first indication information indicating whether a COT request function is activated;
second indication information indicating a first channel access priority;
third indication information indicating a time-domain offset duration between a first preselected resource and transmission of the first request message;
fourth indication information indicating an index of a first resource block set; or
fifth indication information indicating a quantity of COT requested.

21. The apparatus according to any one claims 18 to 20, wherein the first request message is carried via a sidelink control message (SCI), or wherein the first request message is carried via a medium access control (MAC) control element (CE).

22. The apparatus according to any one of claims 18 to 21, wherein a resource to transmit the first request message is allocated by a network device, or is actively selected by the terminal device.

23. The apparatus according to any one of claims 18 to 22, wherein the first request is transmitted via any one of: unicast, groupcast, or broadcast transmission.

24. The apparatus according to any one of claims 18 to 23, wherein a channel access mechanism for the first request message is a type-1 channel access mechanism or a type-2 channel access mechanism.

25. The apparatus according to any one of claims 18 to 24, further comprises:
a processing module, configured to detect a corresponding first response message of the first request message within a first time range, wherein the first response message indicates or confirms the terminal device is allowed to transmit subsequent sidelink data by a type-2 channel access mechanism.

26. The apparatus according to claim 25, wherein
first sidelink data available in a logic channel of the terminal device is already associated with a corresponding sidelink grant;
a start time unit of the first time range is a time unit when the first request message is transmitted; or the start time unit of the first time range follows the time unit when the first request message is transmitted, and an interval between the time unit when the first request message is transmitted and the start time unit of the first time range is a first offset duration; and
an end time unit of the first time range is a time unit containing a first sidelink transmission; or the end time unit of the first time range precedes the time unit when the first sidelink transmission occurs, and the interval between the time unit when the first sidelink transmission occurs and the end time unit of the first time range is referred to as a second offset duration; wherein the first sidelink transmission follows the transmission of the first request message, and is the temporally closest sidelink transmission to a transmission of the first request message.

27. The apparatus according to claim 26, wherein the second offset duration is greater than or equal to a duration required for the terminal device to perform channel access using a type-1 channel access mechanism.

28. The apparatus according to claim 25, wherein first sidelink data available in a logic channel of the terminal device is already associated with corresponding sidelink grant; wherein
a start time unit of the first time range is a time unit when the first request message is transmitted; or the start time unit of the first time range follows the time unit when the first request message is transmitted, and an interval between the time unit when the first request message is transmitted and the start time unit of the first time range is a first offset duration; and
an end time unit of the first time range follows the time unit when the first request message is transmitted, and the interval between the time unit when the first request message is transmitted and the end time unit of the first time range is a fourth offset duration, and the fourth offset duration is greater than the first offset duration.

29. The apparatus according to claim 28, wherein
the end time unit precedes the time unit containing a first sidelink transmission; and/or the interval between the end time unit and the first sidelink transmission is greater than or equal to a duration required for the terminal device to perform channel access using a type-1 channel access mechanism;
wherein the first sidelink transmission follows the transmission of the first request message, and is the temporally closest sidelink transmission to a transmission of the first request message.

30. The apparatus according to claim 25, wherein
first sidelink data available in a logic channel of the terminal device does not yet have a corresponding sidelink grant;
a start time unit of the first time range is a third offset duration in addition to the first request message; and
a length of the first time range is a first duration.

31. The apparatus according to any of claims 25 to 29, wherein
the processing module is further configured to, in a case where a first response message is detected within a first time range, transmit subsequent sidelink data based on the first response message by a type-2 channel access mechanism; or
the processing module is further configured to, in a case where the first response message is not detected within the first time range, discard a sidelink data transmission temporally closest to transmission of the first request message, or perform channel access using a type-1 channel access mechanism, or trigger resource reselection.

32. The apparatus according to any of claims 25 to 30, wherein
the apparatus is configured to, in a case where a first response message is detected within a first time range, select a resource based on the first response message; or
the apparatus is configured to, in a case where the first response message is not detected within the first time range, transmit again the first request message subsequent to the first time range.

33. The apparatus according to claim 18 to 25, wherein
the first request message is transmitted separately; or
the first request message and second sidelink data are transmitted simultaneously.

34. The apparatus according to claim 33, in a case where the first request message is transmitted separately, the first request message is assigned a highest channel access priority.

35. A terminal device, comprising a processor and memory, wherein computer instructions are stored within the memory, and the processor, when loading and executing the computer instructions, is caused to perform the method as defined in any of claims 1 to 17.

36. A computer-readable storage medium, storing one or more computer programs therein, wherein the one or more computer programs, when loaded and run by a processor, cause the processor to perform the method as defined in any of claims 1 to 17.

37. A chip, comprising: programmable electric logic circuitry and/or one or more program instructions, wherein the chip, when running, is configured to perform the method as defined in any of claims 1 to 17.

38. A computer program product, comprising: one or more computer instructions stored within a computer-readable storage medium, wherein the one or more computer instructions, when loaded from the computer-readable storage medium and executed by a processor, cause the processor to perform the method as defined in any of claims 1 to 17.
